# EUROPEAN PATENT SPECIFICATION

(11) **EP 3 678 990 B1**
(45) Date of publication and mention of the grant of the patent: **20.04.2022**
(21) Application number: 18766014.7
(22) Date of filing: 31.08.2018
(51) Int. Cl.: C01B 25/30, C01B 25/45, H01M 4/58

(54) **PROCESS FOR PRODUCING PARTICULATE CARBON-COATED LITHIUM IRON PHOSPHATE, CARBON COATED LITHIUMIRON PHOSPHATE AND ITS USES**
VERFAHREN ZUR HERSTELLUNG VON TEILCHENFÖRMIGEM KOHLENSTOFFBESCHICHTETEM LITHIUMEISENPHOSPHAT, KOHLENSTOFFBESCHICHTETES LITHIUMEISENPHOSPHAT UND SEINE VERWENDUNGEN
PROCÉDÉ DE PRODUCTION DE PHOSPHATE DE FER LITHIÉ REVÊTU DE CARBONE PARTICULAIRE, PHOSPHATE DE FER LITHIÉ REVÊTU DE CARBONE ET SES UTILISATIONS

(30) Priority: 04.09.2017 GB 201714101
(43) Date of publication of application: 15.07.2020
(73) Proprietor: Johnson Matthey Public Limited Company, London EC4A 4AB (GB)
(72) Inventor: COPLEY, Mark, Reading Berkshire RG4 9NH (GB); RIVAS-VELAZCO, Maria Elena, Reading Berkshire RG4 9NH (GB); PETRUCCO, Enrico, Reading Berkshire RG4 9NH (GB)
(74) Representative: Gleave, Robert James
(86) International application number: PCT/GB2018/052469
(87) International publication number: WO 2019/043403

(56) References cited:
- EP-A1- 2 883 840
- CN-A- 103 427 072
- CN-A- 104 752 692
- CN-A- 105 470 503
- US-A1- 2011 114 875
- Eastman: "Butvar Polyvinyl Resins: properties and uses", , 1 January 2017 (2017-01-01), XP002786216, Retrieved from the Internet: URL:https://www.eastman.com/Literature_Cen ter/A/ADDBVR3978.pdf [retrieved on 2018-11-02]

## Description

### Field of the Invention

The present invention relates to lithium transition metal phosphate materials, their preparation and use as a cathode material in secondary lithium ion batteries.

### Background of the Invention

Lithium metal phosphates with olivine structures have emerged as promising cathode materials in secondary lithium ion batteries. Advantages of lithium metal phosphates compared with other lithium compounds include the fact that they are relatively benign environmentally, and have excellent safety properties during battery handling and operation.

Melting processes, hydrothermal processes and solid-state processes are the most common synthesis routes for the preparation of lithium metal phosphates.

Relatively poor electrochemical performance of lithium metal phosphates has been attributed to their poor electronic conductivity, and their performance has been significantly improved by coating the particles with electronically conductive carbon.

CN104752692 A describes a preparation method for an LiFePO₄/C composite anode material. The method includes the steps of: (1) mixing: weighing the raw material iron phosphate or its hydrate and a lithium source compound according to an Li/Fe mole ratio of 1-1.06: 1, adding a carbon source and conducting mixing, then adding a ball milling medium to conduct ball milling for 1-10h so as to obtain a precursor slurry; (2) drying: conducting drying by a high speed air blowing electrostatic spray drying technology, separating an air channel from a slurry channel by internal and external casing pipes, erupting high speed air flow from the external casing pipe, and ejecting the slurry obtained in step (1) from the central internal pipe to form particles or fiber, thus obtaining a precursor; and (3) heat treatment: conducting high temperature heat treatment for 2-16h on the precursor under inert atmosphere protection, and then performing cooling to room temperature under inert atmosphere, thus obtaining the LiFePO₄/C composite anode material.

CN 105470530 A describes a preparation method of spherical lithium iron phosphate having a uniform carbon cladding layer. The preparation method comprises: 1, white spherical iron phosphate powder is synthesized through a liquid precipitation method so as to be adopted as a spherical iron phosphate precursor; 2, a uniformly-dispersed rheological body is subjected to mixing preparation through a rheological phase method; and 3, the rheological body is dried and sintered, cooling is performed to achieve a room temperature, and screening is performed so as to complete the production process of the spherical lithium iron phosphate having the uniform carbon cladding layer.

CN103427072 A describes an in-situ carbon coating method for lithium iron phosphate. The method comprises the steps: dissolving an organic carbon source in a solvent A to form an organic carbon source solution, then adding lithium iron phosphate particles into the above organic carbon source solution, stirring uniformly to form a carbon source material suspending liquid; dumping the above carbon source material suspending liquid into a solvent B in which the above carbon source material has extremely low solubility, to make the carbon source material uniformly precipitate on the surface of the lithium iron phosphate particles, filtering and drying to obtain carbon source material coated lithium iron phosphate particles; placing the carbon source material coated lithium iron phosphate particles in nitrogen or inert gas for protection, keeping temperature at 350 °C - 850 °C for 1-10 h to fully carbonize the carbon source material and further to obtain the carbon uniformly-coated lithium iron phosphate material.

US2011/114875 A1 describes methods and compositions useful for preparing high-quality, nano-scale powdery precursor materials that are efficiently converted to electrochemically active materials, for example those useful in rechargeable lithium-ion batteries as electrode materials and various applications.

EASTMAN: "Butvar Polymer Reins: properties and uses", INTERNET CITATION, 1 January 2017 (2017-01-01), XP002786216 describes the properties of commercially available Butvar resins.

There remains a need for lithium metal phosphates which can be made by simple, cost effective and scalable processes, employ low cost precursors, and exhibit advantageous electrochemical properties such as increased capacity.

### Summary of the Invention

The present inventors have found that the electrochemical performance of carbon-coated lithium iron phosphate can be improved by controlling the properties of the carbon-containing precursor used in its preparation. In particular, the present inventors have found that it is particularly advantageous to use a polyvinyl butyral with particular properties, in combination with dehydrated iron phosphate as the iron precursor.

As the skilled person will be aware, polyvinyl butyrals (PVBs) are typically copolymers with the Formula I below:

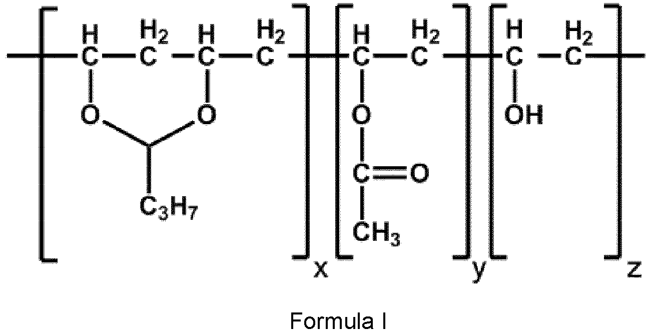

As the skilled person will understand, the copolymer typically includes (e.g. consists of) vinyl alcohol residues (z), vinyl butyral residues (x) and optionally vinyl acetate residues (y). These residues are typically distributed throughout the copolymer (i.e. it is not typically a block copolymer). The values of x, y and z in Formula I can be controlled to control the properties of the PVB. Typically, the weight % of vinyl butyral residues (the residue of bracket x) is referred to as the butyryl content. Typically, the weight % of vinyl alcohol residues (the residue of bracket z) is referred to as the hydroxyl content. Typically, the weight % of vinyl acetate residues (the residue of bracket y) is referred to as the acetyl content. The acetyl content may be the remainder after the hydroxyl content and butyryl content has been accounted for. Note that acetyl residues need not be present (i.e. the value of y may be zero). (The weight % of residues recited herein is intended to include the polymer backbone shown in Formula I.)

PVBs may be formed by reaction of a copolymer of polyvinyl alcohol and polyvinyl acetate with butyraldehyde, or by reaction of polyvinyl alcohol with butyraldehyde. The ratio of vinyl alcohol to vinyl acetate in the original copolymer, and the amount of butyraldehyde reacted with the copolymer, controls the butyryl, hydroxyl and acetyl content of the PVB.

The butyryl, hydroxyl and acetyl content of the PVB, together with its molecular weight, affect its viscosity. As demonstrated in the Examples below, use of PVBs in which the viscosity, butyryl content, hydroxyl content and/or molecular weight are controlled to particular levels as the carbon source in the production of carbon-coated lithium iron phosphate leads to materials which exhibit improved electrochemical performance, e.g. improved capacity. In particular, without wishing to be bound by theory, the present inventors believe that an intermediate molecular weight in combination with a relatively high butyryl content leads to improved interaction with the iron and/or lithium containing precursors used to make the carbon coated lithium iron phosphate. This effect is observed in particular where the iron phosphate precursor is dehydrated.

Accordingly, in a first aspect the present invention provides a process for producing particulate carbon-coated lithium iron phosphate, the process comprising:
- a milling step in which lithium-containing precursor, dehydrated iron phosphate and carbon-containing precursor are combined and subjected to milling; and
- a calcination step in which the product of the milling step is calcined to provide carbon coated particulate lithium iron phosphate,
wherein the carbon-containing precursor is polyvinyl butyral having a molecular weight distribution such that at least 75% of the polyvinyl butyral has a molecular weight in the range from 30000 to 90000. The polyvinyl butyral may have a butyryl content of at least 70 wt%. The polyvinyl butyral may have a hydroxyl content of 30 wt% or less. The polyvinyl butyral may have a viscosity in the range from 50 to 350 cP when measured as a 10 wt% solution in isopropyl alcohol at a shear rate of 100 1/s.

### Brief Description of the Drawings

**Figure 1** shows the specific capacity of the lithium iron phosphate samples prepared in Examples 1 and 2, and Comparative Examples 1 and 2.
**Figure 2** shows the discharge energy density of the lithium iron phosphate samples prepared in Examples 1 and 2, and Comparative Examples 1 and 2.
**Figure 3** shows the discharge curve for the lithium iron phosphate sample prepared in Comparative Example 1.
**Figure 4** shows the discharge curve for the lithium iron phosphate sample prepared in Comparative Example 2.
**Figure 5** shows the discharge curve for the lithium iron phosphate sample prepared in Example 1.
**Figure 6** shows the discharge curve for the lithium iron phosphate sample prepared in Example 2.

### Detailed Description

Preferred and/or optional features of the invention will now be set out. Any aspect of the invention may be combined with any other aspect of the invention unless the context demands otherwise. Any of the preferred and/or optional features of any aspect may be combined, either singly or in combination, with any aspect of the invention unless the context demands otherwise.

The present invention provides a process for making particulate carbon-coated lithium iron phosphate, using polyvinyl butyral as a carbon-containing precursor. The PVB may have a molecular weight in the range from 30,000 to 90,000, e.g. from 40,000 to 80,000. The molecular weight distribution is such that at least 75%, for example at least 80%, at least 90% at least 95% or at least 99% (e.g. by number) of the PVB molecules have a molecular weight in the recited range.

The PVB may have a butyryl content in the range from 70 wt% to 95 wt%. The butyryl content may be at least 70 wt%, at least 75 wt%, or at least 78 wt%. The butyryl content may be 98 wt% or less, 95 wt% or less, 90 wt% or less, 86 wt% or less, 85 wt% or less, 84 wt% or less, or 83 wt% or less. The present inventors believe that a relatively high butyryl content is advantageous, particularly in combination with a relatively low molecular weight, since this results in carbon coated lithium iron phosphate with improved electrochemical properties.

The hydroxyl content of the PVB may be in the range from 5 wt% to 30 wt%. The hydroxyl content may be at least at least 2 wt%, at least 5 wt%, at least 8 wt%, at least 10 wt%, at least 14 wt%, at least 15 wt%, at least 16 wt% or at least 17 wt%. It may be 30 wt% or less, 25 wt% or less or 22 wt% or less. The present inventors believe that a relatively low hydroxyl content is advantageous, particularly in combination with a relatively low molecular weight, since this results in carbon coated lithium iron phosphate with improved electrochemical properties.

As discussed above, the butyryl content is the wt% of butyryl residues in the PVB polymer and the hydroxyl content is the wt% of hydroxyl residues in the PVB polymer. The PVB may optionally include acetyl residues, and the content of the acetyl residues may be the balance of the content of the PVB. In other words, the sum of the acetyl content, the butyryl content and the hydroxyl content may be 100 wt%. Alternatively, where acetyl is not present, the sum of the butyryl content and the hydroxyl content may be 100 wt%.

The PVB may have a viscosity in the range from 50 to 350 cP when measured as a 10 wt% solution in isopropyl alcohol at a shear rate of 100 1/s. It may have a viscosity of at least 50 cP, at least 70 cP, at least 90 cP or at least 100 cP. It may have a viscosity of 350 cP or less, 300 cP or less, 250 cP or less 200 cP or less or 150cP or less. The present inventors have found that when the viscosity of the PVB is too high or too low, the capacity of the resulting carbon-coated lithium iron phosphate is reduced.

The particulate carbon-coated lithium iron phosphate of the present invention typically has the formula LiₓFe_{y}PO₄, in which x is 0.8-1.2 and y is 0.8-1.2, and in which up to 10 atom % (e.g. up to 5 atom %) of the Fe may be replaced with a dopant metal, up to 10 atom % (e.g. up to 5 atom %) of the phosphate may be replaced with SO₄ and/or SiO₄, and up to 10 atom % of the Li may be replaced with Na and/or K. The lithium iron phosphate may have the formula LiFePO₄, in which up to 10 atom % (e.g. up to 5 atom %) of the Fe may be replaced with a dopant metal and up to 10 atom % (e.g. up to 5 atom %) of the phosphate may be replaced with SO₄ and/or SiO₄, and up to 10 atom % of the Li may be replaced with Na and/or K. The lithium iron phosphate may have the formula LiₓFe_{y}PO₄, in which x is 0.8-1.2 and y is 0.8-1.2. The lithium iron phosphate may have the formula LiFePO₄.

The dopant metal may be one or more selected from Mn, Co, Ni, Al, Mg, Sn, Pb, Nb, B, Cu, Cr, Mo, Ru, V, Ga, Ca, Sr, Ba, Ti, Zr, Cd. The dopant metal may be one or more selected from Mn, Al, Ti and Zr. It may be preferred that the lithium iron phosphate is undoped. Where the lithium iron phosphate is doped, typically dopant-containing precursor is added in the milling step.

The carbon-coated lithium iron phosphate is typically prepared by a process comprising a milling step and a calcination step. The milling step may be a dry milling step, or may be a wet milling step, e.g. carried out in the presence of a liquid, such as water or an organic solvent. Suitable organic solvents include isopropyl alcohol, glycol ether, acetone and ethanol. The milling step may be a high energy milling step.

The present inventors have found that where the milling step is carried out in the presence of a liquid (particularly an organic liquid such as isopropyl alcohol), it is particularly advantageous to use dehydrated iron phosphate in combination with the PVBs of the present invention, since this provides the observed excellent electrochemical properties while avoiding problems of caking and clogging during milling and/or calcining.

The term "high energy milling" is a term well understood by those skilled in the art, to distinguish from milling or grinding treatments where lower amounts of energy are delivered. For example, high energy milling may be understood to relate to milling treatments in which at least 100kWh of energy is delivered during the milling treatment, per kilogram of solids being milled. For example, at least 150kWh, or at least 200kWh may be delivered per kilogram of solid being milled. There is no particular upper limit on the energy, but it may be less than 500kWh, less than 400kWh, or less than 350kWh per kilogram of solids being milled. Energy in the range from 250kWh/kg to 300kWh/kg may be typical. The milling energy is typically sufficient to cause mechanochemical reaction of the solids being milled.

In the milling step lithium-containing precursor, dehydrated iron phosphate and PVB are combined and subjected to milling. Prior to the milling step, the precursors may be mixed in order to intimately combine them, e.g. using a homogeniser.

Suitable lithium-containing precursors include lithium carbonate (Li₂CO₃), lithium hydrogen phosphate (Li₂HPO₄) and lithium hydroxide (LiOH). Li₂CO₃ may be preferred.

The present invention employs dehydrated iron phosphate. The skilled person will readily understand what is meant by dehydrated lithium iron phosphate. Iron phosphates are typically prepared in their dihydrate or tetrahydrate forms. Dehydrated iron phosphate is typically prepared by dehydration of hydrated iron phosphate, e.g. by heating (e.g. heating at 80°C in a vacuum oven for 12 hours). The dehydrated iron phosphate may include less than 5wt% water, less than 3 wt% water, less than 1 wt% water or less than 0.1 wt% water. It may be substantially free of water.

The iron phosphate may have a D50 particle size of about 4 µm, e.g. in the range from 0.5 µm to 15 µm. the D50 particle size may be at least 1 µm or at least 2 µm. It may be less than 10 µm, less than 6 µm, less than 5 µm or less than 4.5 µm. The iron phosphate may have a D10 particle size of about 1.5 µm, e.g. 0.5 µm to 3 µm. The iron phosphate may have a D90 particle size of about 8 µm, e.g. 5 µm to 10 µm, e.g. 6 µm to 9 µm.

Typically, the iron phosphate and the lithium precursor (and optionally dopant precursor) are combined in suitable proportions to give the desired stoichiometry to the lithium iron phosphate product.

The amount of PVB added is not particularly limited in the present invention. For example, the amount of carbon precursor may be selected to give a carbon content of 1 to 5 wt% in the carbon-coated lithium iron phosphate, e.g. 1 to 3 wt%. The amount of carbon precursor added in the milling step may be in the range from 3 to 15 wt%, e.g. 3 to 7 wt%.

Spray drying may be carried out between the milling and calcination steps.

In the calcination step, the product of the milling step is typically calcined under an inert atmosphere to provide the particulate carbon-coated lithium iron phosphate. The calcination step performs two functions. Firstly, it results in pyrolysis or carbonisation of the carbon precursor to form a conductive carbon coating on the lithium iron phosphate particles. Secondly, it results in crystallisation and the formation of the lithium iron phosphate into the desired olivine structure. Typically, the calcination is carried out in an inert atmosphere, for example in an inert gas such as argon or nitrogen. It may alternatively be carried out in a reducing atmosphere. It is typically carried out at a temperature in the range from 550°C to 800°C, e.g. from 600°C to 750°C, or from 600°C or 650°C to 700°C. 680°C is particularly suitable. Typically, the calcination is carried out for a period of 3 to 24h. The calcination time depends on the scale of manufacture (i.e. where larger quantities are prepared, longer calcination times may be preferred. At a commercial scale, 8 to 15 hours may be suitable, for example.

The process described herein may further comprise the step of forming an electrode (typically a cathode) comprising the carbon-coated lithium iron phosphate. Typically, this is carried out by forming a slurry of the particulate carbon-coated lithium iron phosphate, applying the slurry to the surface of a current collector (e.g. an aluminium current collector), and optionally processing (e.g. calendaring) to increase the density of the electrode. The slurry may comprise one or more of a solvent, a binder, additional carbon material and further additives.

Typically, the electrode of the present invention will have an electrode density of at least 2.3 g/cm³, at least 2.4 g/cm³, or at least 2.5 g/cm³. It may have an electrode density of 2.8 g/cm³ or less, or 2.65 g/cm³ or less. The electrode density is the electrode density (mass/volume) of the electrode, not including the current collector the electrode is formed on. It therefore includes contributions from the active material, any additives, and additional carbon material, and any binder used.

The lithium iron phosphate may be capable of being formed into an electrode having an electrode density as defined above when formed into an electrode, e.g. by the electrode formation method of the Examples.

The process described herein may further comprise constructing a battery or electrochemical cell including the electrode comprising the carbon-coated lithium iron phosphate. The battery or cell typically further comprises an anode and an electrolyte. The battery or cell may typically be a secondary (rechargeable) lithium ion battery.

The present invention will now be described with reference to the following examples, which are provided to assist with understanding the present invention, and are not intended to limit its scope.

### Examples

Experiments were conducted to determine the effect of polyvinyl butyral (PVB) properties on the carbon-coated LiFePO₄ obtained.

Li₂CO₃, and dehydrated FePO₄ were mixed in the desired proportions to obtain stoichiometric LiFePO₄, along with PVB as carbon source (at 4.5wt%). The precursors were mixed in an Ultra Thurrax mixer for two minutes. The precursors were then subjected to high energy milling for 45 minutes, using 0.3 mm YSZ media. The milling was carried out in isopropyl alcohol (IPA), with a solids content of 33-34%, using a Netzsch lab star mill. Approximately 700g of slurry was prepared per batch. The milling slurry was then spray dried and calcined in argon at 680°C for 5 hours, to form olivine lithium iron phosphate coated with conductive carbon.

Three different PVBs were tested. Their properties are shown in Table 1 below. PVBs with the properties listed below are readily available from companies including Kurarat Europe GmbH, Sigma Aldrich, Eastman Chemical and Sekisui Japan.

**Table 1**

| **PVB** | **Molecular Weight** | **Butyryl Content (wt%)** | **Hydroxyl Content (wt%)** | **Viscosity** |
|---|---|---|---|---|
| A | 40000-70000 | 80 | 18-20 | 120 |
| B | 90000-120000 | 88 | 11.5-13.5 | 520 |
| C | 15000 | 87 | 11-12 | 20 |

The viscosity was determined in 10 wt% solutions in IPA at a shear rate of 100 1/s.

Further experiments using hydrated iron phosphate (FePO₄.2H₂O) and PVB-A were unsuccessful, since the milling mixture became caked and the equipment was clogged. The present inventors believe that this is due to an undesirable interaction between the hydrated iron phosphate and the PVB (which includes hydroxide groups) in the presence of the IPA.

### Electrochemical Analysis

The obtained lithium iron phosphate was formed into electrodes, using an electrode coating formulation. The electrode coating formulation had a solids content of approximately 40% by weight. The solids portion consisted of 90wt% of active material (prepared as described above, using the PVBs shown in Table 2 below), 5wt% carbon black (C65 from Imerys^{™}), 5 wt% binder (Solef 5130^{™} (polyvinylidene fluoride, 10wt% binder in n-methyl pyrrolidone). The coating formulations were used to cast electrodes on a 20µm aluminium foil using a vacuum coater, to provide an electrode loading of as shown in Table 2 below (the electrode loading refers to the mass of active material per area of electrode). The coated electrodes were calendared to provide an electrode density as shown in Table 2 below. The electrodes were then dried for 12 hours at 120°C.

**Table 2**

| **Example** | **PVB** | **Electrode Density (g/cm³)** | **Electrode Loading (mg/cm²)** |
|---|---|---|---|
| Example 1 | A | 2.1 | 4.86 |
| Example 2 | A | 2.5 | 5.15 |
| Comparative Example 1 | C | 2.0 | 5.79 |
| Comparative Example 2 | B | 2.0 | 6.26 |

Electrochemical coin cells (2032 button cell from Hohsen^{™}) were formed. The electrolyte was LP30 from Solvonic^{™}, which is 1M LiPF6 in 1:1 by weight mixture of dimethyl carbonate and ethylene carbonate. The anode was 0.75mm thickness lithium, and the separator was a glass microfiber filter (Whatman^{™} GF/F). The pressure used to crimp the coin cell was 750 psi.

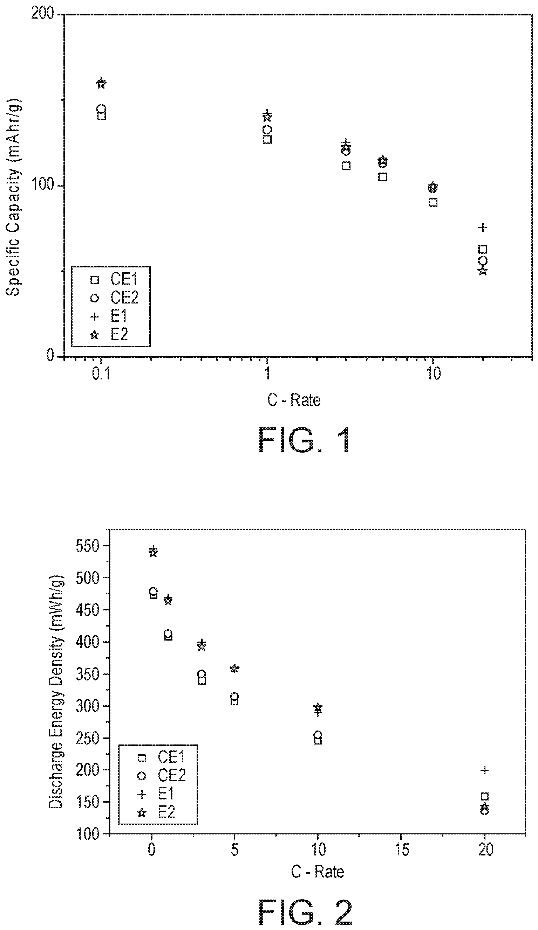

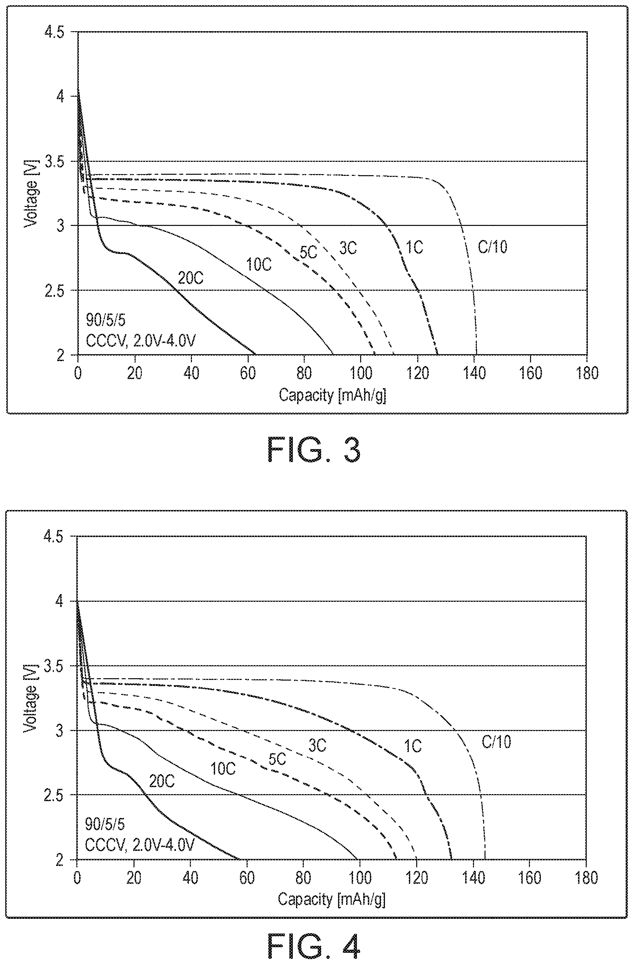

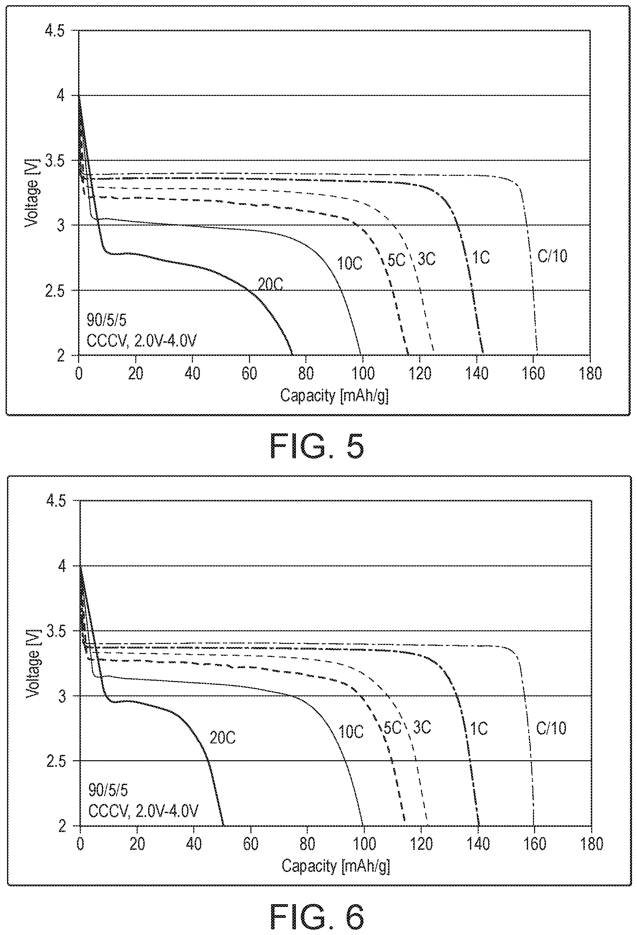

The electrochemical performance of the samples was measured using a voltage window of 4.0V to 2.0V. The results are shown in Figures 1 to 6. Figure 1 shows that Examples 1 and 2, which include PVB-A, exhibit higher specific capacities than Comparative Examples 1 and 2, which use PVB-C and PVB-B, respectively. Figure 2 shows discharge energy density, illustrating that the materials of Examples 1 and 2 provide more energy per unit volume. Figures 3 to 6 show discharge curves for each of the Examples and Comparative Examples, and show that the materials of the Examples exhibit improved electrochemical properties. In particular, higher capacities are observed for the Example materials, and the curves have a sharper "bended knee" shape, permitting access to a larger capacity across a narrower voltage window.

## Claims

1. Process for producing particulate carbon-coated lithium iron phosphate, the process comprising:
- a milling step in which lithium-containing precursor, dehydrated iron phosphate and carbon-containing precursor are combined and subjected to milling; and
- a calcination step in which the product of the milling step is calcined to provide carbon coated particulate lithium iron phosphate,
wherein the carbon-containing precursor is polyvinyl butyral having a molecular weight distribution such that at least 75% of the polyvinyl butyral has a molecular weight in the range from 30000 to 90000.

2. Process according to claim 1 wherein the polyvinyl butyral has a butyryl content of at least 70 wt%, and optionally 86 wt% or less.

3. Process according to any one of the preceding claims wherein the polyvinyl butyral has a hydroxyl content of 30 wt% or less, and optionally 14 wt% or more

4. Process according to any one of the preceding claims wherein the polyvinyl butyral has a viscosity in the range from 50 to 350 cP when measured as a 10 wt% solution in isopropyl alcohol at a shear rate of 100 1/s.

5. Process according to any one of the preceding claims wherein the lithium-containing precursor is lithium carbonate.

6. Process according to any one of the preceding claims wherein the milling step is a wet high energy milling step.

7. Process according to claim 6 wherein the milling step is carried out in isopropyl alcohol.

8. Process according to any one of the preceding claims, in which the lithium iron phosphate has the formula LiₓFe_{y}PO₄, in which x is 0.8-1.2 and y is 0.8-1.2, and in which up to 10 atom % of the Fe may be replaced with a dopant metal, up to 10 atom % of the phosphate may be replaced with SO₄ and/or SiO₄ and up to 10 atom % of the Li may be replaced with Na and/or K.

## Patentansprüche

1. Verfahren zur Herstellung von teilchenförmigem kohlenstoffbeschichtetem Lithiumeisenphosphat, wobei das Verfahren umfasst:
- einen Mahlschritt, in dem eine lithiumhaltige Vorläuferverbindung, dehydriertes Eisenphosphat und eine kohlenstoffhaltige Vorläuferverbindung vereint und einem Mahlen unterzogen werden; und
- einen Kalzinierschritt, in dem das Produkt des Mahlschritts kalziniert wird, um kohlenstoffbeschichtetes teilchenförmiges Lithiumeisenphosphat bereitzustellen, wobei die kohlenstoffhaltige Vorläuferverbindung Polyvinylbutyral mit einer derartigen Molmassenverteilung ist, dass mindestens 75 % des Polyvinylbutyrals eine Molmasse im Bereich von 30.000 bis 90.000 aufweisen.

2. Verfahren nach Anspruch 1, wobei das Polyvinylbutyral einen Butyrylgehalt von mindestens 70 Gew.-% und optional 86 Gew.-% oder weniger aufweist.

3. Verfahren nach einem der vorhergehenden Ansprüche, wobei das Polyvinylbutyral einen Hydroxylgehalt von 30 Gew.-% oder weniger und optional 14 Gew.-% oder mehr aufweist.

4. Verfahren nach einem der vorhergehenden Ansprüche, wobei das Polyvinylbutyral eine Viskosität im Bereich von 50 bis 350 cP aufweist, wenn es als eine 10-Gew.-%-Lösung in Isopropylalkohol bei einer Schergeschwindigkeit von 100 1/s gemessen wird.

5. Verfahren nach einem der vorhergehenden Ansprüche, wobei die lithiumhaltige Vorläuferverbindung Lithiumcarbonat ist.

6. Verfahren nach einem der vorhergehenden Ansprüche, wobei der Mahlschritt ein nasser Hochenergie-Mahlschritt ist.

7. Verfahren nach Anspruch 6, wobei der Mahlschritt in Isopropylalkohol durchgeführt wird.

8. Verfahren nach einem der vorhergehenden Ansprüche, in dem das Lithiumeisenphosphat die Formel LiₓFe_{y}PO₄ aufweist, in der x 0,8-1,2 ist und y 0,8-1,2 ist und in der bis zu 10 Atom-% des Fe durch ein Dotierungsmetall ersetzt sein können, bis zu 10 Atom-% des Phosphats durch SO₄ und/oder SiO₄ ersetzt sein können und bis zu 10 Atom-% des Li durch Na und/oder K ersetzt sein können.

## Revendications

1. Procédé de production de phosphate particulaire de lithium et de fer revêtu de carbone, le procédé comprenant :
- une étape de broyage dans laquelle un précurseur contenant du lithium, du phosphate de fer déshydraté et un précurseur contenant du carbone sont combinés et soumis à un broyage ; et
- une étape de calcination dans laquelle le produit de l'étape de broyage est calciné pour donner du phosphate de lithium et de fer particulaire revêtu de carbone,
dans lequel le précurseur contenant du carbone est du polybutyral de vinyle ayant une distribution des masses moléculaires telle qu'au moins 75 % du polybutyral de vinyle a une masse moléculaire dans la plage de 30 000 à 90 000.

2. Procédé selon la revendication 1 dans lequel le polybutyral de vinyle a une teneur en butyryle d'au moins 70 % en poids, et éventuellement de 86 % en poids ou moins.

3. Procédé selon l'une quelconque des revendications précédentes dans lequel le polybutyral de vinyle a une teneur en hydroxyle de 30 % en poids ou moins, et éventuellement de 14 % en poids ou plus.

4. Procédé selon l'une quelconque des revendications précédentes dans lequel le polybutyral de vinyle a une viscosité dans la plage de 50 à 350 cP lorsqu'on la mesure sur une solution à 10 % en poids dans l'alcool isopropylique à une vitesse de cisaillement de 100 1/s.

5. Procédé selon l'une quelconque des revendications précédentes dans lequel le précurseur contenant du lithium est du carbonate de lithium.

6. Procédé selon l'une quelconque des revendications précédentes dans lequel l'étape de broyage est une étape de broyage à haute énergie par voie humide.

7. Procédé selon la revendication 6 dans lequel l'étape de broyage est réalisée dans l'alcool isopropylique.

8. Procédé selon l'une quelconque des revendications précédentes dans lequel le phosphate de lithium et de fer a pour formule LiₓFe_{y}PO₄, où x vaut 0,8-1,2 et y vaut 0,8-1,2, et où jusqu'à 10 % at. du Fe peut être remplacé par un métal dopant, jusqu'à 10 % at. du phosphate peut être remplacé par SO₄ et/ou SiO₄ et jusqu'à 10 % at. du Li peut être remplacé par Na et/ou K.
